# EUROPEAN PATENT SPECIFICATION

(11) **EP 0 463 889 B1**
(45) Date of publication and mention of the grant of the patent: **11.09.1996**
(21) Application number: 91305953.1
(22) Date of filing: 01.07.1991
(51) Int. Cl.: H01R 39/38, H01R 39/41, H02K 5/14

(54) **Electric-powered tool**
Elektrisch betriebenes Werkzeug
Outil fonctionnant électriquement

(30) Priority: 29.06.1990 JP 70057/90
(43) Date of publication of application: 02.01.1992
(73) Proprietor: HITACHI KOKI CO., LTD., Chiyoda-ku, Tokyo (JP)
(72) Inventor: Abo, Kimitaka, Mito-shi, Ibaraki-ken (JP); Kikuchi, Junichi, Katsuta-shi, Ibaraki-ken (JP); Osada, Yoshio, Katsuta-shi, Ibaraki-ken (JP)
(74) Representative: Senior, Alan Murray

(56) References cited:
- FR-A- 2 321 205
- GB-A- 503 229
- US-A- 4 963 779

## Description

This invention relates to an electric-powered tool.

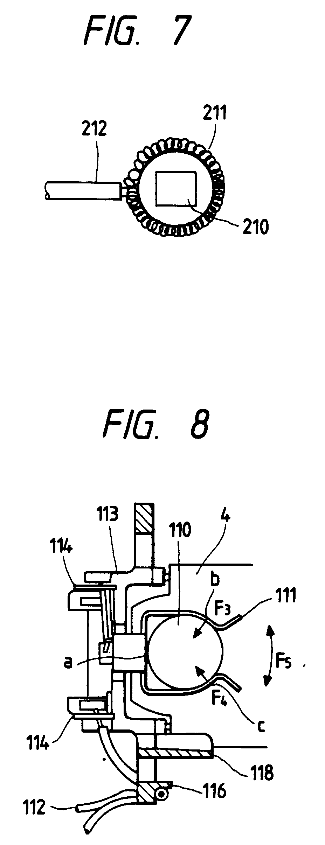

An electric-powered tool is discussed in late published Japanese utility model application provisional publication No. 3-18664, published 25 February 1991. This tool comprises a housing and a brush motor having brush terminals, each of brush terminals comprising a coil spring wound around a brush holder supporting a brush, for providing electrical connection between the brush holder and an end of a field coil. Fig. 7 is a plan view of such a brush terminal. A brush terminal comprising a coil spring 211 provides electrical connection between a lead wire 212 and a cylindrical brush holder 210. Work of connecting the brush terminal 211 to the brush holder 210 is carried out using a hole into which a carbon brush is inserted or a narrow space inside a stator assembled in the housing because there is no space for access by a hand or a fixing tool to the fixing area. Thus, work efficiency is low and skilfullness is required. This obstructs reduction of an assembling interval or automatic assembling.

Fig. 8 is a plan view of another brush terminal proposed in the Japanese utility model application referred to above. A brush terminal 111 made of a conductive elastic body is provided to improve the assembling interval as shown in Fig. 8. The brush terminal 111 contacts the brush holder 110 at three points "a", "b", and "c". However, the number of contacting points of this brush terminal 111 is fewer than that of the brush terminal 211 comprising the coil spring so that there is a problem that a stable conducting condition cannot be maintained. In other words, vibration of the electric-powered tool causes arcing by momentary disconnection or minute rotation of the brush holder.

The present invention has been developed in order to reduce the above-described drawbacks inherent to the conventional electric-powered tool.

According to the present invention there is provided an electric-powered tool comprising:
a housing; and
a brush motor contained in said housing, said brush motor including:
brushes for providing electrical connections to an armature;
brush holders fixed to the housing for holding the brushes; and
brush terminals, made of an electrically conductive and elastic material having at least one blade portion, a palm portion, for providing electrical connection thereof to said brushes through said brush holder by engaging said brush holders, and an arm portion extending from said palm portion to an end where a fixing portion is provided, wherein each of said brush terminals is fixed by said fixing portion with a positional offset relative to the respective brush holder such that, when assembled, the arm portion is elastically deformed so as to develop a contact pressure between said palm portion and said brush holder.

The invention will be more clearly understood from the following description, given by way of example only with reference to the accompanying drawings in which:
Fig. 1 is a cross-sectional view of the embodiment of the invention of an electric-powered tool partially shown;
Fig. 2A is a side view of the brush holder 11;
Fig. 2B is a front view of the brush holder 11;
Fig. 3 is a plane view of the terminal block 13;
Fig. 4 is a cross-sectional view of the terminal block 13 taken on line A-A in Fig. 3;
Fig. 5 shows a shape of the brush terminal when it is assembled;
Fig. 6 is an interconnection diagram of the electric-powered tool;
Fig. 7 is a plane view of a prior art brush terminal; and
Fig. 8 is a plane view of another prior art brush terminal.

The same or corresponding elements or parts are designated as like references throughout the drawings.

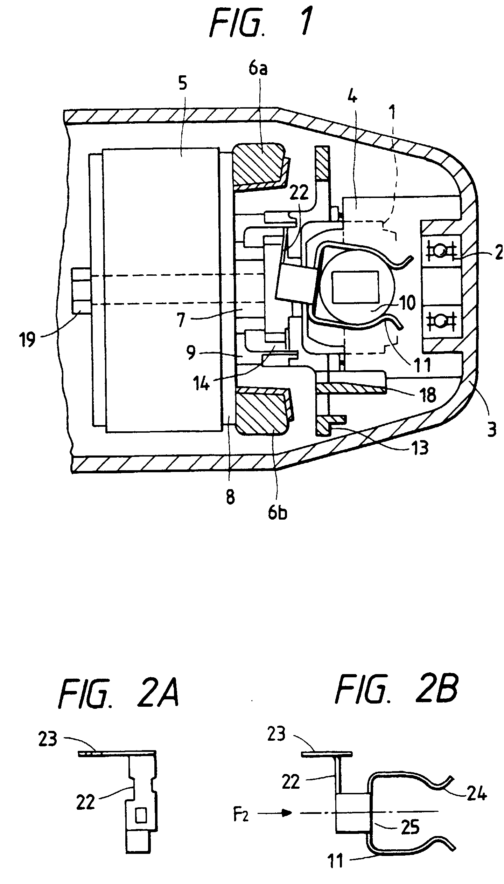

Fig. 1 is a cross-sectional view of an embodiment of the invention of an electric-powered tool partially shown. Fig. 6 is an interconnection diagram of the electric-powered tool. In Fig. 1, a rotor 1 is supported by a housing 3 through bearings 2 at both its ends. A stator 5 is arranged around the rotor 1 and fixed to the housing 3. Field coils 6a and 6b are provided on the stator 5. One end of a field coil 6a is connected to a terminal 9a; another end, to a terminal 9b. Similarly, one end of a field coil 6b is connected to a terminal 9c; another end, to a terminal 9d. The first terminal block 8 supports the terminals 9a-9d. The first terminal block 8 is formed of an insulating material and is fixed to the stator 5. A second terminal block 13 formed of an insulating material confronts the terminal block 8 and is fixed to the first terminal block 8 by respectively fitting the terminals 9 (9a-9d) to terminals 14a, 14b and terminal portions 23 provided to the second terminal block 13. The brush terminal 11 is electrically connected to the brush holder 10 by catching and gripping the brush holder 10, the brush holder 10 being fixed to the housing 3 in a position determined such that proper commutating is provided.

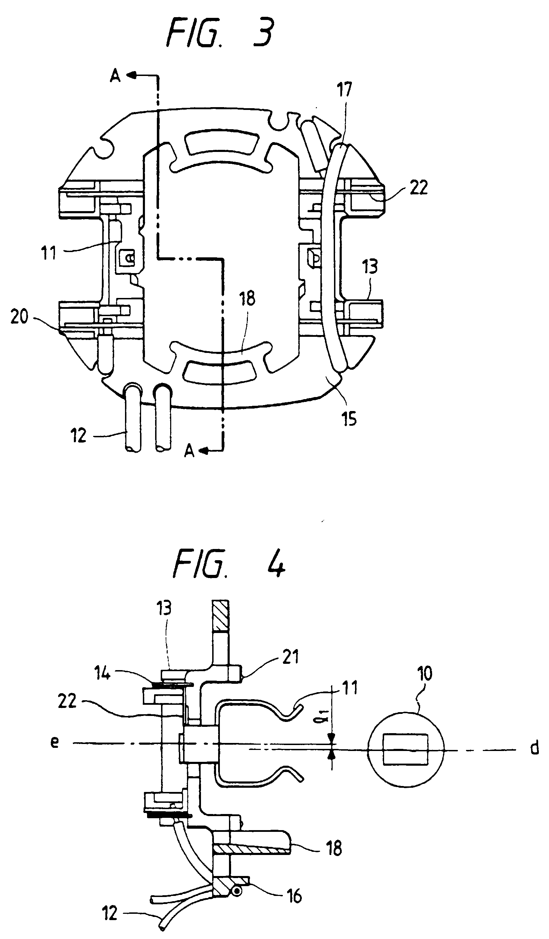

Fig. 2A is a side view of the brush holder 11. Fig. 2B is a front view of the brush holder 11. Fig. 3 is a plane view of the terminal block 13. Fig. 4 is a cross-sectional view of the terminal block 13 taken on line A-A in Fig. 3.

The brush terminal 11 is made of an electrically conductive material and has the male terminal portion 23 to be fitted to a female terminal 9 and an arm portion 22 subjected to an elastic deformation at assembling. The brush terminal 11 has inclined portions (blades) 24 so as to catch and grip the brush holder 10 with an elastic deformation of the brush terminal 11 (blades 24) caused by fitting the brush holder 10 to the brush terminal 11 whose gap has a smaller width than the diameter of the brush holder 10.

The terminal block 13 has male terminals (including the male terminal portions 23 of the brush terminals 11) 14 whose number is the same as that of the female terminals 9 (9a-9d) connected to both ends of the field coil 6a or 6b and is formed so as to be integral with an arm portion 15 having a rib 16 for fixing a lead wire 12 and a rib 18 for guiding a cooling air. The brush terminal 11 is fixed to 1 the arm portion 15. A switch SW or the lead wire 12 is connected to one end of the male terminal 14 and is supported by the arm portion 15 using rib 16 and a slot 17 for fixing a lead wire.

Figure 4 shows the brush terminal 11 and the brush holder 10 prior to assembly.

The brush holder 10 is fixed to the housing 3 and when assembled the terminal block 13 is mounted so as to have a fixed rotational relationship to the brush holder 10 about the axis of the rotor (and stator 5) e.g. by being fixed to the housing 3 directly or via the stator 5 to which it is connected. More specifically the elements of the motor are arranged with the terminal portions 23 fixed in a position relative to their respective brush holders 10 such that, as shown in Figure 4, if the arm portion 22 were unstressed, the centre line "e" of the brush terminal 11 would be displaced by a distance "ℓ₁", from the parallel diameter "d" of the brush holder 10.

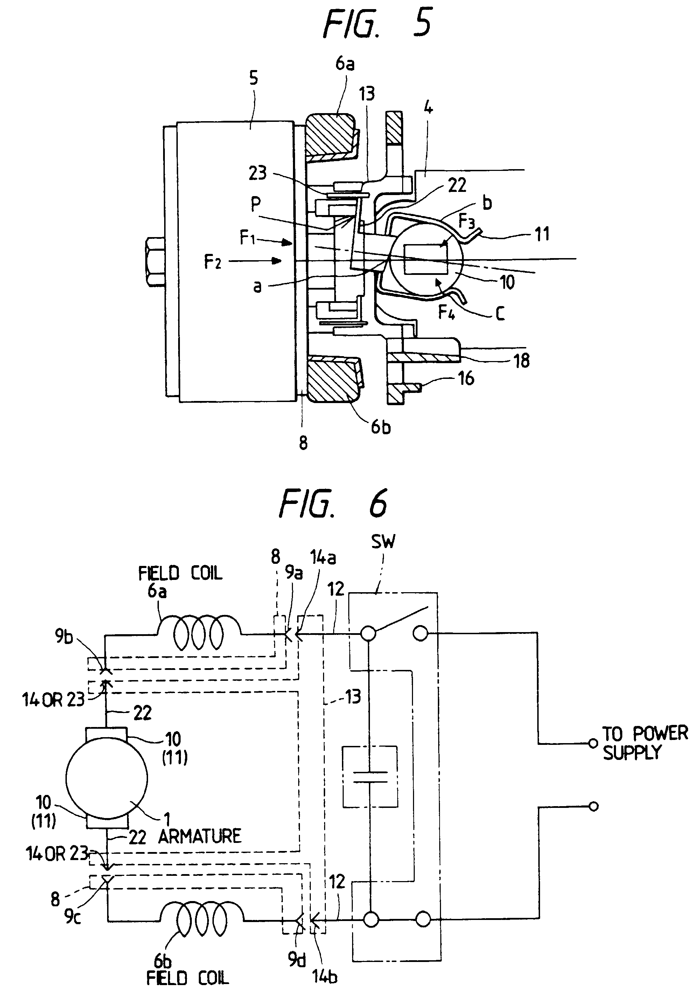

Further, when the motor is assembled, the brush holder 10 and the terminal portions 23 are in a fixed predetermined axial relationship such that the brush terminal 11 is forced to move so as to surround the brush holder 10 and the arm portion 22 is thereby elastically deformed. Hence, a moment is formed about P and a permanent contact force F₁ exists between the palm portion 25 and the brush holder 10 as illustrated in Figure 5.

When the brush holder 10 and the brush terminal 11 are moved together along their respective lines "d" and "e" i.e. in their fixed rotational relationship, the first point of contact between them on the palm portion 25, will be where the diameter "d" touches it. However, as the palm portion 25 is moved back to its final assembled position, it rotates about P and its face therefore changes in inclination. As a result, the point of contact with the brush holder 10 moves clockwise (as illustrated) around the brush holder 10. If the components are so arranged such that when the motor is assembled the point of contact lies along the line "e", then the forces F₃ and F₄ will be equal, maximizing the effectiveness of the gripping effect.

Further clarifying the arrangements, Fig. 4 shows the brush terminal 11 and the brush holder 10 prior to assembly. An offset ℓ₁ is provided between a diameter "d" of the brush holder 10 which is parallel to a rotational axis of the rotor 1 and a centre line "e" of the brush terminal 11.

Figure 5 shows the brush terminal 11 when it is assembled with the brush holder 10.

The brush terminal 11 is fitted to the brush holder 10 by an assembling force F₂. The brush terminal 11 is elastically deformed and, since the brush holder is fixed to the housing 3, the brush terminal 11 is mounted with a slight deformation left.

The brush terminal 11 is fitted to and electrically connected to the brush holder 10 by restoring forces F₃ and F₄ and also F₁ developed by the above-mentioned slight deformation.

Moreover, when the brush terminal 11 is in place, a contact pressure at the contacting point "a" of the palm portion 25 of the brush terminal is developed by the restoring force of the arm portion 22. The arm portion 22 is elastically deformed around a supporting joint P because it is fixed to the terminal block 13 with a positional offset. Thus, the contact pressure of the brush terminal 11 to the brush holder 10 if further increased.

The offset ℓ₁ shown in Fig. 4 is so determined that the restoring force F₃ is not larger but is approximately the same as the restoring force F₄ in the assembled condition shown in Fig. 5.

In the above-mentioned structure, the terminal block 13 is mounted to the terminal block 8 fixed to the stator 5 by connection between connectors 9 and 14 or terminal portions 23. Then, the stator 5 is assembled into the housing 3. This provides connection of the brush terminal 11 to the brush holder 10 automatically and completes the interconnection at the same time.

This invention prevents electrical poor contact due to vibrations because the contact pressure is increased by fixing the brush terminal 11 with positional offset, so that the pressure force exist constantly to the brush holder.

## Claims

1. An electric-powered tool comprising:
a housing (3); and
a brush motor contained in said housing, said brush motor including:
brushes for providing electrical connections to an armature (1);
brush holders (10) fixed to the housing for holding the brushes; and
brush terminals (11), made of an electrically conductive and elastic material having at least one blade portion (24), a palm portion (25) for providing electrical connection thereof to said brushes through said brush holder (10) by engaging said brush holders (10), and an arm portion (22) extending from said palm portion (25) to an end where a fixing portion (23) is provided, wherein each of said brush terminals (11) is fixed by said fixing portion (23) with a positional offset (ℓ₁) relative to the respective brush holder (10) such that, when assembled, the arm portion (22) is elastically deformed so as to develop a contact pressure between said palm portion (25) and said brush holder (10).

2. An electric-powered tool as claimed in claim 1 wherein each fixing portion (23) is at a predetermined fixed position relative to its associated brush holder (10).

3. An electric-powered tool as claimed in claim 1 or 2 wherein the offset (l₁) is the smallest distance between the centre line (e) of the brush terminals (11) and a parallel diameter (d) of their associated brush holders (10).

4. An electric-powered tool as claimed in any preceding claim wherein when assembled, the distance in the direction of the diameter (d) between the brush holder (10) and the fixing portion (23) is predetermined such that the point of contact between the brush holder (10) and the palm portion (25) lies on the centre line (e).

5. An electric-powered tool as claimed in any preceding claim, wherein said arm portion (22) further extends over said fixing portion (23) to form a connecting portion for connecting said brush to an end of a field coil (6a,6b) of a stator(5).

6. An electric-powered tool as claimed in any preceding claim, further comprising:
a first terminal block (8) supporting second connecting portions (9a - 9d) receiving said connecting portions respectively;
a second terminal block (13) supporting said connecting portions; and
pairs of connectors for receiving a supply voltage and supplying it to a series circuit including a field coil (6a, 6b) of said stator(5), and an armature (1) of said motor, one from each pair of said pairs of connectors being provided on said first terminal block, another one from each pair of said pairs of connectors being provided on said second terminal block, said connecting portions being connected to said second connecting portions and each of said pairs of connectors being connected by fitting said first terminal block to said second terminal block.

## Patentansprüche

1. Ein elektrisch angetriebenes Werkzeug mit:
einem Gehäuse (3); und
einem Bürstenmotor, der in dem Gehäuse enthalten ist, wobei der Bürstenmotor umfaßt:
Bürsten zum Vorsehen von elektrischen Verbindungen mit einem Läufer (1);
Bürstenhalter (10), die an dem Gehäuse zum Halten der Bürsten befestigt sind; und
Bürstenanschlüsse (11), die aus einem elektrisch leitfähigen und elastischen Material hergestellt sind, mit wenigstens einem Klingenteil (24), einem Handflächenteil (25) zum Vorsehen einer elektrischen Verbindung davon mit den Bürsten durch den Bürstenhalter (10) durch Ineingriffgelangen mit den Bürstenhaltern (10), und einem Armteil (22), der sich von dem Handflächenteil (25) zu einem Ende erstreckt, wo ein Befestigungsteil (23) vorgesehen ist, worin jeder der Bürstenanschlüsse (11) durch den Befestigungsteil (23) mit einem Positionversatz l₁ relativ zu dem jeweiligen Bürstenhalter (10) so befestigt ist, daß, wenn er zusammengebaut ist, der Armteil (22) elastisch verformt ist, um einen Kontaktdruck zwischen dem Handflächenteil (25) und dem Bürstenhalter (10) zu entwickeln.

2. Ein elektrisch angetriebenes Werkzeug wie in Anspruch 1 beansprucht, wobei jeder Befestigungsteil (23) sich in einer vorbestimmten festen Position relativ zu seinem zugeordneten Bürstenhalter (10) befindet.

3. Ein elektrisch angetriebenes Werkzeug, wie in Anspruch 1 oder 2 beansprucht, worin der Versatz (l₁) die kleinste Entfernung zwischen der Mittellinie (e) der Bürstenanschlüsse (11) und einem parallelen Durchmesser (d) ihrer zugeordneten Bürstenhalter (10) ist.

4. Ein elektrisch angetriebenes Werkzeug wie in einem vorhergehenden Anspruch beansprucht, worin, wenn es zusammengebaut ist, die Entfernung in Richtung des Durchmessers (d) zwischen dem Bürstenhalter (10) und dem Befestigungsteil (23) so vorbestimmt ist, daß der Kontaktpunkt zwischen dem Bürstenhalter (10) und dem Handflächenteil (25) auf der Mittellinie (e) liegt.

5. Ein elektrisch angetriebenes Werkzeug wie in einem vorhergehenden Anspruch beansprucht, worin der Armteil (22) sich weiter über den Befestigungsteil (23) erstreckt, um ein Verbindungsteil zum Verbinden der Bürste mit einem Ende einer Feldspule (6a, 6b) eines Stators (5) zu bilden.

6. Ein elektrisch angetriebenes Werkzeug wie in einem vorhergehenden Anspruch beansprucht, welches weiter umfaßt:
einen ersten Anschlußblock (8), der zweite Verbindungsteile (9a-9d) trägt, die jeweils die Verbindungsteile aufnehmen;
einen zweiten Anschlußblock (13), der die Verbindungsteile trägt; und
Paare von Verbindern zum Aufnehmen einer Zufuhrspannung und zum Zuführen davon zu einer Reihenschaltung mit einer Feldspule (6a, 6b) des Stators (5) und einem Läufer (1) des Motors, wobei eines von jedem Paar der Paare von Verbindern auf dem ersten Anschlußblock vorgesehen ist, ein anderes von jedem Paar der Paare von Verbindern auf dem zweiten Anschlußblock vorgesehen ist, die Verbindungsteile mit den zweiten Verbindungsteilen verbunden sind und jedes der Paare von Verbindern verbunden ist, indem der erste Anschlußblock an den zweiten Anschlußblock angepaßt wird.

## Revendications

1. Outil fonctionnant électriquement, comprenant:
un boîtier (3); et
un moteur à courant continu à collecteur contenu dans ledit boîtier, ledit moteur à courant continu à collecteur comprenant:
des balais pour assurer des connexions électriques avec un induit (1);
des porte-balais (10) fixés au boîtier pour supporter les balais; et
des bornes (11) de balais, formées d'un matériau électriquement conducteur et élastique, comportant au moins une partie doigts (24), une partie paume (25) pour assurer sa connexion électrique avec lesdits balais par l'intermédiaire dudit porte-balai (10) du fait de sa venue en contact avec ledit porte-balai (10), et une partie patte (22) s'étendant depuis ladite partie paume (25) jusqu'à une extrémité où une partie de fixation (23) est présente, chacune desdites bornes (11) de balais étant fixée par ladite partie de fixation (23) avec un écart (ℓ₁) de position tel, par rapport au porte-balai respectif (10), que, dans l'état assemblé, la partie patte (22) se trouve déformée élastiquement au point de créer une pression de contact entre ladite partie paume (25) et ledit porte-balai (10).

2. Outil fonctionnant électriquement selon la revendication 1, dans lequel chaque partie de fixation (23) se trouve à un endroit fixe par rapport à son porte-balai associé (10).

3. Outil fonctionnant électriquement selon la revendication 1 ou 2, dans lequel l'écart (ℓ₁) est la distance la plus faible entre l'axe (e) des bornes (11) de balais et le diamètre parallèle (d) de leurs porte-balais associés.

4. Outil fonctionnant électriquement selon l'une quelconque des revendications précédentes, dans lequel, dans l'état assemblé, la distance dans la direction du diamètre (d) entre le porte-balai (10) et la partie de fixation (23) est déterminée préalablement de telle sorte que le point de contact entre le porte-balai (10) et la partie paume (25) se trouve sur l'axe (e).

5. Outil fonctionnant électriquement selon l'une quelconque des revendications précédentes, dans lequel ladite partie patte (22) s'étend en outre au-dessus de ladite partie de fixation (23) de manière à former une partie de connexion destinée à connecter ledit balai à une extrémité d'un enroulement inducteur (6a, 6b) d'un stator (5).

6. Outil fonctionnant électriquement selon l'une quelconque des revendications précédentes, comprenant, en outre:
un premier bloc de connexion (8) supportant des secondes parties de connexion (9a-9d) recevant respectivement lesdites parties de connexion;
un second bloc de connexion (13) supportant lesdites parties de connexion; et
des paires de connecteurs destinés à recevoir une tension d'alimentation et à fournir cette tension à un circuit série comprenant l'enroulement inducteur (6a, 6b) dudit stator (5), et l'induit (1) dudit moteur, un connecteur de chaque paire desdites paires de connecteurs étant prévu sur ledit premier bloc de connexion, un autre connecteur de chaque paire desdites paires de connecteurs étant prévu sur ledit second bloc de connexion, lesdites parties de connexion étant connectées auxdites secondes parties de connexion et chacune desdites paires de connecteurs étant connectées par enfichage dudit premier bloc de connexion dans ledit second bloc de connexion.
